# EUROPÄISCHE PATENTSCHRIFT

(11) **EP 1 669 632 B1**
(45) Veröffentlichungstag und Bekanntmachung des Hinweises auf die Patenterteilung: **20.08.2008**
(21) Anmeldenummer: 05026297.1
(22) Anmeldetag: 02.12.2005
(51) Int. Cl.: F16F 9/512, F16F 9/34

(54) **Schwingungsdämpfer mit amplitudenselektiver Dämpfkraft**
Shock absorber with a damping force depending on the amplitude
Amortisseur de vibrations avec une force d'amortissement dépendant de l'amplitude

(30) Priorität: 08.12.2004 DE 102004058965
(43) Veröffentlichungstag der Anmeldung: 14.06.2006
(73) Patentinhaber: ZF FRIEDRICHSHAFEN AG, 88046 Friedrichshafen (DE)
(72) Erfinder: Hammer, Thomas, 97653 Bischofsheim (DE); Doppernas, Michael, 96170 Priesendorf (DE); Planitzer, Matthias, 97520 Röthlein (DE); Denner, Manfred, 97711 Maßbach (DE)

(56) Entgegenhaltungen:
- EP-A- 0 848 182
- DE-A1- 4 427 273
- DE-A1- 19 749 356

## Beschreibung

Die Erfindung betrifft einen Schwingungsdämpfer mit amplitudenselektiver Dämpfkraft entsprechend dem Oberbegriff von Patentanspruch 1.

Aus der DE 197 49 356 B4 ist ein Schwingungsdämpfer mit amplitudenselektiver Dämpfkraft bekannt, der in einer ersten Ausführungsvariante eine Kolbenanordnung aufweist, die ein unteres und ein oberes Ventil umfasst, die von einem Abstandsstück auf Abstand gehalten werden. Beide Ventile sind jeweils beidseitig mit Dämpfventilscheiben und mindestens einer Rückschlagventilscheibe bestückt. Zwischen den beiden Ventilen ist ein Schaltring axial verschiebbar angeordnet, der in Abhängigkeit der Bewegungsrichtung der Kolbenstange auf den einander zugewandten Ventilscheiben der beiden Ventile zur Anlage kommt und dabei einen Ringspalt zwischen den Ventilscheiben und der Innenwandung des Zylinders freigibt oder blockiert. Beide Ventile sind jeweils im Bereich der Rückschlagventilscheibe und der Dämpfventilscheibe mit einem Voröffnungsquerschnitt versehen, die in Abhängigkeit der Schaltstellung des axial beweglichen Schaltringes durchströmt werden. In der Durchlass-Stellung des axial beweglichen Schaltringes überlagern sich die Drosselwirkungen der Voröffnungsquerschnitte an den Ventilscheiben und bestimmen damit die Dämpfkraft. Dieser Ventilaufbau erscheint durch die Vielzahl der verwendeten Ventilscheiben vergleichsweise kompliziert und aufwändig. Des weiteren wirken sich die jeweils parallel wirkenden Toleranzen der beiden Voröffnungsquerschnitte funktionsverschlechternd aus. Zusätzlich müssen beide Ventile mit Kolbenringen bestückt sein, die zwar nicht eingezeichnet sind, jedoch für den Fachmann unbedingt vorhanden sein müssen, da ein Ringspalt zwischen der Innenwandung des Zylinders und einem Ventil deutlich größer ist als ein Voröffnungsquerschnitt. Zwei Kolbenringe stellen nicht nur ein Kostenproblem dar, sondern können sich ebenfalls auf die Dämpfkraft im Sinne von Dämpfkraftabweichungen auswirken.

Die Figuren 7 bis 10 der DE 197 49 356 B4 betreffen eine Variante, bei der der Schaltring zwischen einer Oberseite einer Ventilscheibe und einem tassenförmigen Gehäuse, das zwischen einem Federfänger und der Kolbenstange verspannt ist, bewegbar ist. Auch bei dieser Lösungsvariante kommen zwei Voröffnungsquerschnitte zur Anwendung, die in Durchlass-Stellung des axial beweglichen Rings wirksam werden.

Die DE 197 38 617 C2 beschreibt einen amplitudenselektiven Schwingungsdämpfer, dessen Kolbenring axial in einer Nut des Kolbens beweglich ausgeführt ist. Der Nachteil dieser Lösung besteht darin, dass für jede Dämpfkraftkennlinie im Bereich der amplitudenabhängigen Dämpfkraft ein individuell bemessener Kolben verwendet werden muss.

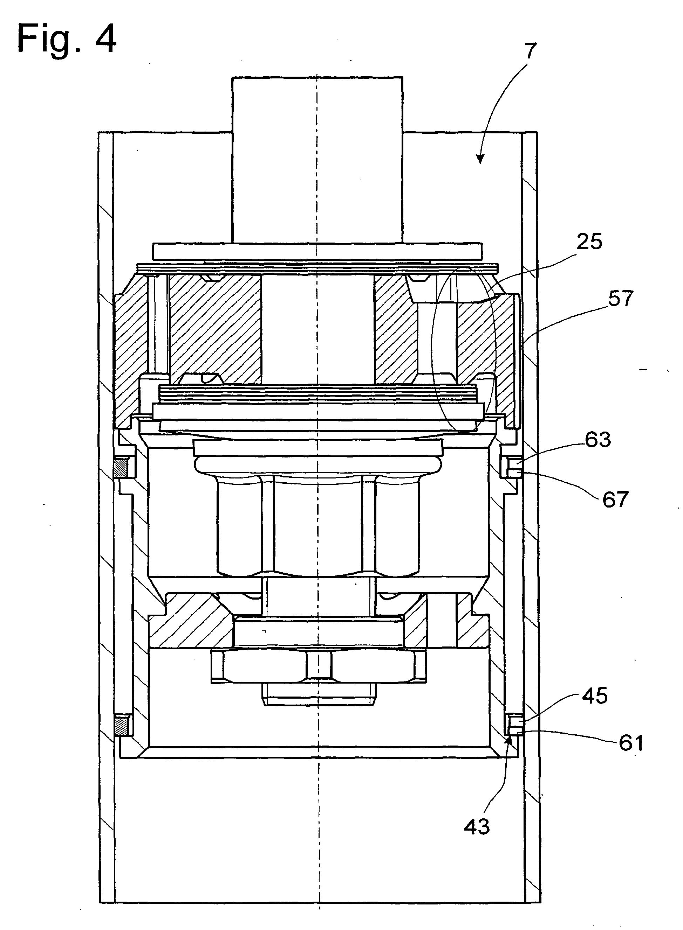

Die gattungsbildende EP 0 848 182 A2 offenbart einen Schwingungsdämpfer mit amplitudendenselektiver Dämpfkraft, wobei eine vom Kolbenkörper unabhängige Baugruppe in einem Zylinder fixiert ist (Fig.4).

Die US 6 352 145 B1 offenbart einen schwingungsdämpfer mit amplitudenselektiver Dämpfkraft wobei sich eine Baugruppe am Kolbenkörper axial fixiert abstützt.

Aufgabe der vorliegenden Erfindung ist es, einen Schwingungsdämpfer mit amplitudenselektiver Dämpfkraft zu realisieren, der mit möglichst standardisierbaren Bauteilen für möglichst viele verschiedene Dämpfkraftkennlinien verwendbar ist.

Man erreicht eine axial kompakte Bauweise, die die nutzbare Kolbenhublänge kaum negativ beeinflusst. Ein weiterer großer Vorteil der Erfindung besteht darin, dass ein Standard-Kolbenkörper und eine Standard-Ventilscheibenbestückung verwendet werden kann. Daraus ergibt sich ein deutlicher Kostenvorteil, da nicht nur wesentliche Teile, sondern auch Fertigungsvorrichtungen übernommen werden können. Die unabhängige Baugruppe ist ein einfaches Zusatzteil, das je nach Schwingungsdämpferkonzept hinzugefügt werden kann.

In weiterer vorteilhafter Ausgestaltung weist die Baugruppe einen hülsenförmigen Grundkörper auf. Einerseits wird der vorhandene Bauraum günstig ausgenutzt und andererseits können Fertigungseinrichtungen, die z. B. für die Kolbenkörperbearbeitung vorhanden sind, verwendet werden.

Der hülsenförmige Grundkörper weist Ringstege auf, an denen die Anschlagflächen für den Schaltring ausgeführt sind. Zwischen den Ringstegen ist der Schaltring axial beweglich, so dass die radiale Führung des Schaltrings im Vergleich zum Stand der Technik deutlich verbessert ist.

Zusätzlich weist der Kolbenkörper eine Zentrierung für die Baugruppe auf. Mit der Montage am Kolbenkörper nimmt die Baugruppe ihre optimale Position ein, so dass keine Klemmeffekte der Baugruppe mit der Innenwandung des Zylinders auftreten können.

Gemäß einem vorteilhaften Unteranspruch ist der hülsenförmige Grundkörper mehrteilig ausgeführt, wobei eine Teilungsfuge axial zwischen den Anschlagflächen verläuft. Ein derartiger Grundkörper lässt sich sintertechnisch aufgrund der Entformbarkeit deutlich einfacher herstellen. Man kann dann nämlich die Teilungsfuge für einen Teilabschnitt im Bereich der Anschlagfläche ausführen.

Um trotz der Mehrteiligkeit des Grundkörpers eine einfache Montage erreichen zu können, steht ein erster Teilabschnitt des hülsenförmigen Grundkörper in axialer Überdeckung mit einem zweiten Teilabschnitt über eine Presspassung in Verbindung.

Zur Vermeidung von Leckströmen innerhalb der Kolbenanordnung, die die Dämpfkraftkennlinie negativ beeinflussen können, wird die Baugruppe zum Kolbenkörper durch mindestens eine Dichtung abgedichtet.

Insbesondere ein Kolbenkörper, der im Schwingungsdämpfer auch Querkräfte übertragen muss, z. B. bei einem Schwingungsdämpfer in Federbeinausführung, sollte eine Mindestlänge in Verbindung mit einem möglichst geringen Ringspaltmaß zur Innenwandung des Zylinders aufweisen, da damit eine optimale Führung des Kolben erreicht wird. Ein enger Ringspalt, der das Dämpfmittel zur Strömungsverbindung in Richtung des Schaltrings durchlassen soll, wirkt sich in Abhängigkeit der Dämpfmitteltemperatur deutlich auf die Dämpfkraftkennlinie der Kolbenanordnung aus. Deshalb weist eine Mantelfläche des Kolbenkörpers mindestens eine Axialnut auf, die in der Strömungsverbindung zwischen den beiden Arbeitsräumen mündet. Mit mindestens einer Axialnut wird die Qualität der Führung der Kolbenanordnung nicht messbar verschlechtert, jedoch werden Viskositätsänderungen des Dämpfmittels kompensiert und machen sich nicht mehr dämpfkraftverändert bemerkbar.

Wenn der Schaltring eine Momentanstellung zwischen den Anschlagflächen einnimmt, dann soll trotzdem ein Drosselquerschnitt wirksam sein, der zwar eine kleine aber dennoch eine definierte Dämpfkraft erzeugt. Um dieser Forderung zu genügen, weist die Kolbenanordnung einen Drosselring auf, der mindestens einen ersten Voröffnungsquerschnitt bestimmt. Grundsätzlich kann man auf einen Drosselring verzichten, doch wird die gewünschte Dämpfkraftkennlinie leichter reproduzierbar. Alternativ kann die Baugruppe einen Drosselring aufweisen, der mindestens einen ersten Voröffnungsquerschnitt bestimmt.

In Weiterentwicklung der Erfindung ist der Drosselring in Grenzen axial beweglich ausgeführt und in Abhängigkeit der Bewegungsrichtung des Drosselringes werden zwei verschieden große Voröffnungsquerschnitte bestimmt. So kann man z. B. bei einer Ausfahrbewegung der Kolbenstange bzw. des Drosselringes eine größere Dämpfkraft erzeugen als z. B. bei einer Einfahrbewegung der Kolbenstange.

Der Drosselring ist in einer Drosselringnut der Baugruppe axial beweglich ausgeführt und stellt damit ein Einzelteil dar, das zusammen mit der Baugruppe unabhängig von den weiteren Bestandteilen der Kolbenanordnung montiert werden kann.

Der Schaltring bestimmt einen zum Drosselring zusätzlichen Voröffnungsquerschnitt, der bei Anlage an eine der Anschlagflächen wirksam wird. Wenn die Kolbenstangenbewegung eine bestimmt Hublänge überschritten hat, wird der Voröffnungsquerschnitt des Drosselrings nicht einfach blockiert und damit die Kolbenanordnung hermetisch oder ein zweiter Strömungsweg geschlossen, sondern der Schaltring bestimmt einen dann wirksamen Voröffnungsquerschnitt.

Der Voröffnungsquerschnitt, der vom Drosselring bestimmt wird, ist größer als der Voröffnungsquerschnitt, der bei Anlage des Schaltrings wirksam ist. Mit diesem Merkmal wird eine besondere Komforteinstellung erreicht, wenn sich der Schaltring an keiner der beiden Anschlagflächen anliegt und damit nicht wirksam ist.

Bei der konstruktiven Ausgestaltung der Voröffnungsquerschnitte sind verschiedene Möglichkeiten denkbar. So können die Voröffnungsquerschnitte in dem Drosselring und/oder dem Schaltring ausgeführt sein. Insbesondere bei einem, urgeformten Drossel- oder Schaltring bietet sich diese Ausführung an.

Man kann die Voröffnungsquerschnitte auch durch Durchmesserreduzierungen, Nuten oder Vertiefungen am Außendurchmesser ausführen. Diese Methode lässt sich auch leicht spanend umsetzen.

Alternativ können die Voröffnungsquerschnitte als Vertiefung in den Anschlagflächen ausgeformt sein.

Zum Schutz des Schaltrings gegen eine Abnutzung im Moment der Anlage kann dieser in einem Trägerring gekammert sein, der an den Anschlagflächen zur Anlage kommt.

Der hülsenförmige Grundkörper ist bevorzugt über eine Haltescheibe an der Kolbenstange fixiert. Damit die Dämpfventilfunktion der Kolbenanordnung nicht behindert wird, ist die Haltescheibe mit mindestens einer Dämpfmitteldurchlassöffnung ausgeführt.

Man kann die Haltescheibe einteilig mit dem hülsenförmigen Grundkörper ausführen. Diese Variante ist besonders stabil und dabei sehr gut handhabbar.

Die erfindungsgemäße Baugruppe kann separat zu einer Verspannungskette der Kolbenanordnung, die von einer Kolbenmutter fixiert ist, gehalten werden. Diese Ausgestaltung erlaubt die völlig getrennte Montage der Kolbenanordnung. In einem ersten Schritt wird ein konventionelles Kolbendämpfventil montiert und an der Kolbenstange befestigt. Danach wird die Baugruppe montiert. Insbesondere bei Dämpfventilen, die während der Montage auf ihre Funktionsgenauigkeit überprüft werden, bietet sich diese Ausführung an.

Grundsätzlich kann man die Baugruppe über die Kolbenmutter befestigen oder eine auch eine separate Befestigungsmutter nur für die Baugruppe verwenden. Insbesondere bei sehr kurzen Kolbenstangengewinden bietet es sich an, wenn die Haltescheibe der Baugruppe über ein Gewinde mit der Kolbenstange verbunden ist, so dass die separate Befestigungsmutter entfallen kann.

Gemäß einem vorteilhaften Unteranspruch wird mindestens ein Voröffnungsquerschnitt für den Drosselring von einer Einlegescheibe gebildet. Diese Maßnahme hat den Vorteil, dass man einen sehr einfachen Querschnitt für den Drosselring vorsehen oder auf Einprägungen in die Drosselringnut verzichten kann. Des weiteren stellen die Einlegescheiben sehr einfache Bauteile dar, die sich präzise fertigen lassen.

Es kann auch mindestens ein Voröffnungsquerschnitt für den Schaltring von einer Einlegescheibe gebildet werden.

Um insgesamt eine geringe Teilzahl innerhalb der Baugruppe zu erreichen, werden ein Voröffnungsquerschnitt für den Drosselring und ein Voröffnungsquerschnitt für den Schaltring von einem Zwischenring gebildet.

Die Einlagescheiben sollen stets eine definierte Einbaulage einnehmen. Deshalb ist die mindestens eine Einlegescheibe zwischen dem axial geteilten hülsenförmigen Grundkörper verspannt ist. Der Grundkörper und die Haltescheibe stellen zwei separate Bauteile dar.

Man kann auch vorsehen, dass konzentrisch zum hülsenförmigen Grundkörper eine Spannhülse die mindestens eine Einlegescheibe fixiert.

Wenn der Schaltring u. U. mit hoher Geschwindigkeit seine Endlage erreicht, können Anschlaggeräusche auftreten, die sich mit mindestens einem Federelement dämpfen lassen.

Das Federelement sollte möglichst platzsparend ausführbar sein, damit die Baugruppe, insbesondere der hülsenförmige Grundkörper, kurzbauend ist. Deshalb wird das Federelement von einer Federscheibe gebildet.

In vorteilhafter Ausgestaltung ist die Federscheibe mit mindestens einer Aussparung versehen, die größer ist als der Voröffnungsquerschnitt, der von dem Schaltring angesteuert wird. Es soll erreicht werden, dass die Federscheibe nicht den wirksamen Voröffnungsquerschnitt bestimmt.

Bei einer Ausführungsform ist die Haltescheibe mit einem Befestigungsflansch für den hülsenförmigen Grundkörper ausgeführt. Dieses Konstruktionsprinzip erleichtert die Verwendung einer Spannhülse am hülsenförmigen Grundkörper.

Dabei kann zwischen dem Befestigungsflansch und dem hülsenförmigen Grundkörper eine Gewindeverbindung vorliegen.

Für fast jeden Schwingungsdämpfertyp wird ein definierter Voröffnungsquerschnitt festgelegt. Ein Voröffnungsquerschnitt ist grundsätzlich vergleichsweise klein und muss deshalb besonders präzise ausgeführt sein. Fertigungstechnisch bedingte Abweichungen machen sich deutlich in der Dämpfkraftkennlinie des Schwingungsdämpfers bemerkbar. Mit einem Voröffnungsquerschnitt, der mit dem Drosselring zusammenwirkt und einstellbar ist, können die besagten Abweichungen korrigiert oder bei identischen Bauteilen verschiedene Voröffnungsquerschnitte realisiert werden.
Der Voröffnungsquerschnitt wird von zwei Bauteilen gebildet, die relativ zueinander verstellbar sind. Ein Bauteil wird von dem Kolbenkörper und ein Bauteil von der Baugruppe gebildet.

Die Drosselringnut weist eine Steueröffnung auf, deren Überdeckung mit einem Steuerschieber den verstellbaren Voröffnungsquerschnitt bildet. Durch eine Verschiebung der Steueröffnung zum Steuerschieber kann man den Voröffnungsquerschnitt bestimmen.

Es soll für die Strömung durch den Voröffnungsquerschnitt nur ein einziger Strömungsweg vorliegen, um den Voröffnungsquerschnitt möglichst effektiv steuern zu können. Deshalb weist der Steuerschieber eine Tasche auf, die an die Strömungsverbindung in Richtung des Schaltrings angeschlossen ist. Der Voröffnungsquerschnitt am Drosselring und der wirksame Voröffnungsquerschnitt am Schaltring liegen funktional in Reihe.

Anhand der folgenden Figurenbeschreibung soll die Erfindung näher erläutert werden.

Es zeigt:
- Fig. 1 - 4: Ausschnitt aus einem Schwingungsdämpfer mit verschiedenen Schaltstellungen des Schaltringes
- Fig. 5 u. 6: Baugruppe mit einteiliger Haltescheibe
- Fig. 7: Anschlagflächen mit Voröffnungsquerschnitten
- Fig. 8: Schaltring in Trägerring gekammert
- Fig. 9: Baugruppe über Kolbenmutter befestigt
- Fig. 10-13: Schaltring/Drosselring als Einzelteil
- Fig. 14 u. 15: Schaltring/Drosselring mit Durchmesserreduzierungen als Voröffnungsquerschnitt
- Fig. 16 u. 17: Voröffnungsquerschnitt im Schaltring
- Fig. 18 u. 19: Einstellbarer Voröffnungsquerschnitt

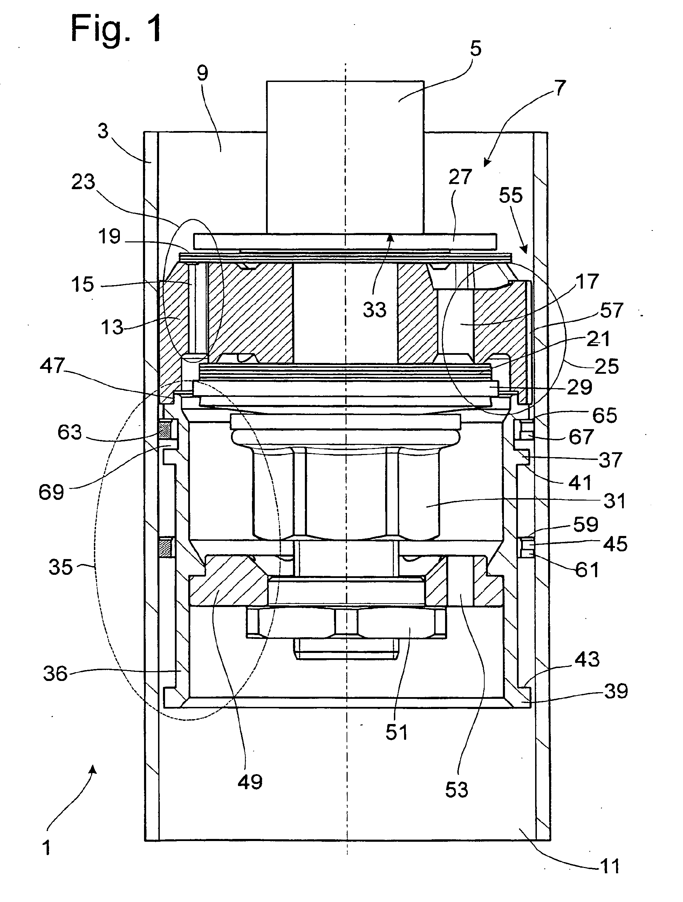

Die Figur 1 zeigt einen Ausschnitt aus einem Schwingungsdämpfer 1 beliebiger Bauart. In einem Zylinder 3 ist eine Kolbenstange 5 zusammen mit einer Kolbenanordnung 7 axial beweglich geführt. Die Kolbenanordnung unterteilt den dämpfmittelgefüllten Zylinder 3 in einen kolbenstangenseitigen Arbeitsraum 9 und einen kolbenstangenfernen Arbeitsraum 11. Ein Hauptbestandteil der Kolbenanordnung ist ein Kolbenkörper 13, der Verbindungskanälen 15; 17 mit Ventilscheiben 19, 21 für beide Durchströmungsrichtungen aufweist. Die Verbindungskanäle 15 und die Ventilscheiben 19 bilden ein Druckstufenventil 23, das eine Dämpfkraft in Einfahrrichtung der Kolbenstange erzeugt. Ein Zugstufenventil 25, das in Ausfahrrichtung der Kolbenstange wirkt, besteht aus den Verbindungskanälen 17 und den Ventilscheiben 21. Die Ventilscheiben sind auf den Kolbenkörper vorgespannt und geben jeweils die Austrittsöffnungen der Verbindungskanäle frei, wenn in den Verbindungskanälen ein bestimmter auf die Ventilscheiben wirksamer Öffnungsdruck aufgebaut ist. Den Ventilscheiben 19; 21 schließen sich noch Stützscheiben 27; 29 für die Ventilscheiben an. Das Paket zwischen den Stützscheiben wird von einer Kolbenmutter 31 auf einen Absatz 33 der Kolbenstange 5 vorgespannt.

Die Kolbenanordnung 7 umfasst eine Baugruppe 35, die vom Kolbenkörper und den Ventilscheiben unabhängig ausgeführt ist. Die Baugruppe 35 verfügt über eine hülsenförmigen Grundkörper 36, der Ringstege 37; 39 aufweist, an denen einander zugewandt Anschlagflächen 41; 43 für einen axial beweglichen Schaltring 45 ausgeführt sind. Axial stützt sich die Baugruppe 35 im kolbenstangenfernen Arbeitsraum 11 am Kolbenkörper 13 ab, der auch eine Zentrierung 47 für die Baugruppe aufweist. Die gesamte Baugruppe 35 wird über eine Haltescheibe 49 an der Kolbenstange 5 fixiert. In diesem Ausführungsbeispiel ist der hülsenförmige Grundkörper 36 einteilig ausgeführt. Eine von der Kolbenmutter 31, die die Verspannungskette der Kolbenanordnung zwischen den beiden Stützscheiben 27; 29 fixiert, unabhängige Zentriermutter 51 spannt die Baugruppe über die Haltescheibe 49 auf den Kolbenkörper 13 vor, wobei die Haltescheibe mit mindestens einer Dämpfmitteldurchlassöffnung 53 versehen ist, um einen ungehinderten Zu- und Abstrom für die Dämpfventile 23; 25 gewährleisten zu können.

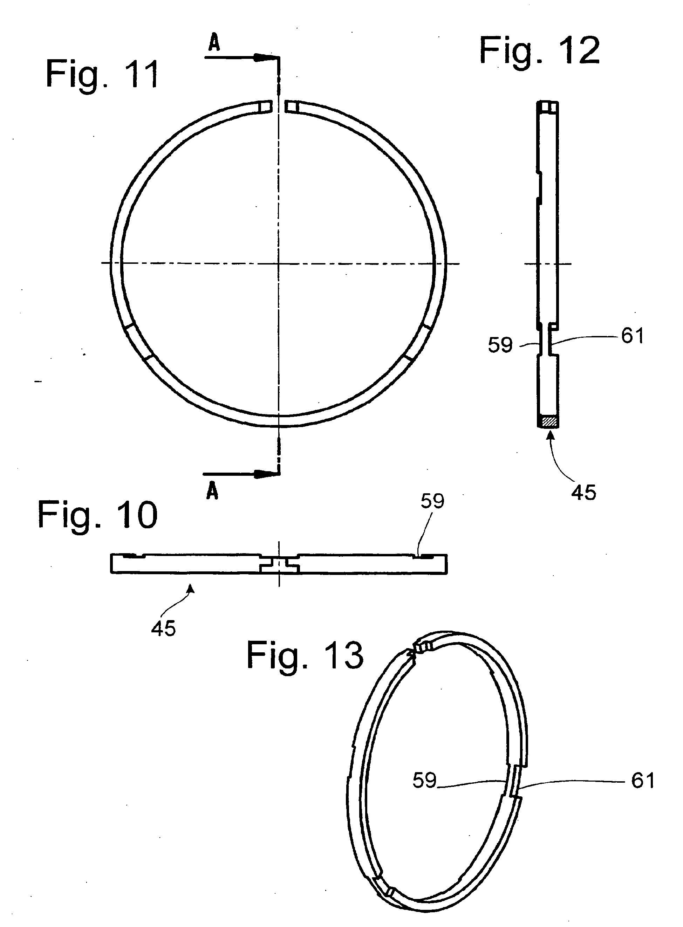

Der Schaltring 45 ist radial gegen die Innenwandung des Zylinders 3 vorgespannt, so dass eine Reibkraft wirksam ist. Nach radial innen bezogen auf den hülsenförmigen Grundkörper besteht ein Ringspalt, der eine Strömungsverbindung 55 zwischen den beiden Arbeitsräumen 9; 11 steuert. Der Strömungsverbindung 55 setzt sich in den Bereich der Mantelfläche des Kolbenkörpers fort. Dazu verfügt der Kolbenkörper über mindestens eine Axialnut 57, z. B. in der Form einer Abflachung. Im Schaltring sind, wie aus den Figuren 10 bis 13 erkennbar ist, Voröffnungsquerschnitte 59; 61 in Form von Vertiefungen auf der Ober- und Unterseite ausgeführt. Die Voröffnungsquerschnitte können unterschiedlich groß ausgeführt sein. Um die korrekte Einbaulage des geschlitzten Schaltrings auf dem hülsenförmigen Grundkörper sicherstellen zu können, ist die Anzahl der Voröffnungsquerschnitte auf der einen Deckseite des Schaltrings 59 ausgeführt als auf der anderen Deckseite. Wenn der Schaltring 45 auf einer Anschlagfläche 41; 43 der Ringstege 37; 39 zur Anlage kommt, werden die Voröffnungsquerschnitte im 59; 61 im Schaltring wirksam.

Neben dem Schaltring 45 verfügt die Baugruppe als Teil der Kolbenanordnung über einen Drosselring 63 der einen ersten Voröffnungsquerschnitt 65; 67 bestimmt. In diesem Ausführungsbeispiel ist der Drosselring 63 in einer Drosselringnut 69 der Baugruppe 35 axial beweglich ausgeführt, so dass in Abhängigkeit der Bewegungsrichtung des Drosselrings einer der beiden Voröffnungsquerschnitte 65, 67 wirksam wird.

Zur besseren Erkennbarkeit ist die Drösselringnut unmaßstäblich breit gezeichnet. Der Drosselring 63 kann sich nur in einem sehr kleinen Maß axial zwischen den Nutseitenwänden bewegen. Der Schaltweg soll mindestens so groß sein, dass die Drosselwirkung des jeweils anliegenden Voröffnungsquerschnitts größer ist als die Drosselwirkung zwischen der abgehobenen Deckseite des Drosselrings. Vom prinzipiellen Aufbau gleicht der Drosselring dem Schaltring, so dass zum besseren Verständnis nochmals auf die Figuren 10 bis 13 verwiesen wird. Der Schaltring bestimmt einen zusätzlichen Voröffnungsquerschnitt 59; 61 zum Voröffnungsquerschnitt 65; 67 des Drosselrings. Der Voröffnungsquerschnitt 65; 67, der vom Drosselring bestimmt wird, ist größer als der Voröffnungsquerschnitt 59; 61, der bei Anlage des Schaltrings wirksam wird.

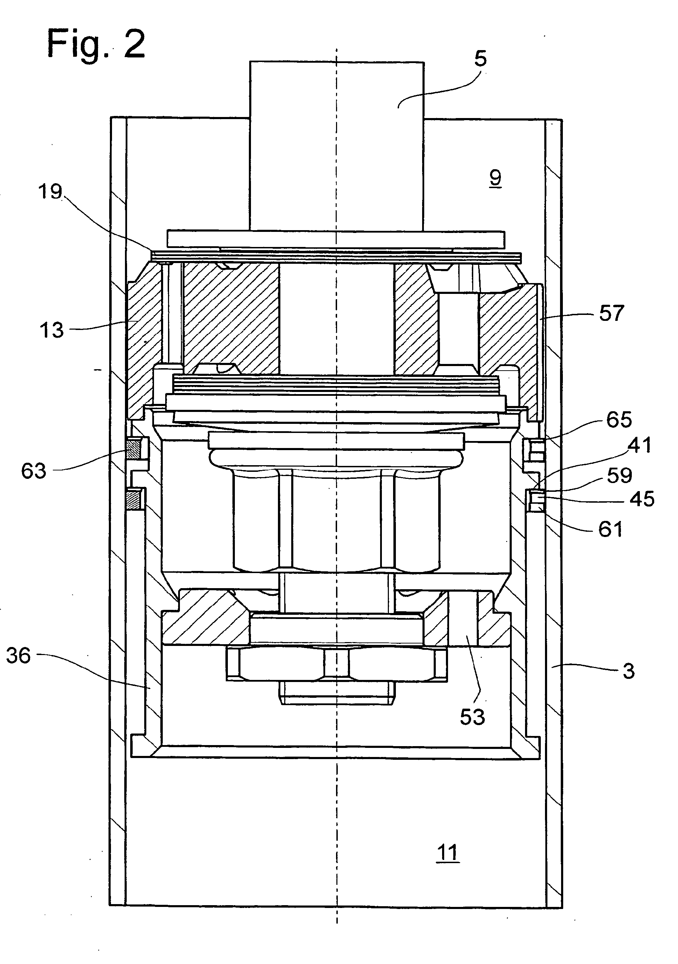

Die Figuren 1 bis 4 sollen die Wirkungsweise des Schwingungsdämpfers mit amplitudenabhängigen Dämpfkraft verdeutlichen. In der Fig. 1 liegt der Drosselring 63 mit seiner oberen Deckseite an der Nutseitenwand der Drosselringnut 69, so dass der Voröffnungsquerschnitt 65 wirksam ist. Der Schaltring 45 befindet sich in einem Abstand zu beiden Anschlagflächen 41; 43. Damit steht ein vergleichsweise großer Voröffnungsquerschnitt 65 zur Verfügung, der dafür sorgt, dass bei einer weiteren Einfahrbewegung in einem Hubbereich, bis der Schaltring 45 an der Anschlagfläche 41 zur Anlage kommt, s. Fig. 2, die Ventilscheiben 19 nicht von dem Kolbenkörper 13 abheben. Die weitere Einfahrbewegung der Kolbenstange 5 wird von dem Voröffnungsquerschnitt 59 des Schaltrings bestimmt, der kleiner ist als der Voröffnungsquerschnitt 65. Bei kleiner Kolbenstangengeschwindigkeit kann das Dämpfmittel aus dem kolbenstangenfernen Arbeitsraum 11 zwischen dem hülsenförmigen Grundkörper 36 und der Innenwandung des Zylinders 3 und radial innen am Schaltring durch den Voröffnungsquerschnitt 59 strömen, den Voröffnungsquerschnitt 65 und den Ringspalt zwischen dem oberen Begrenzungssteg der Drosselringnut 69 und der Zylinderwandung passieren und über die mindestens eine Axialnut 57 im kolbenstangenfernen Arbeitsraum 9 münden. Parallel dazu kann das Dämpfmittel durch die Dämpfmitteldurchlassöffnungen 53 und den Verbindungskanälen 15 auf die Ventilscheiben 19 wirken. Übersteigt die Kolbenstangengeschwindigkeit ein bestimmtes Niveau, dann heben die Ventilscheiben 19 ab, d. h., das Druckstufenventil 23 öffnet.

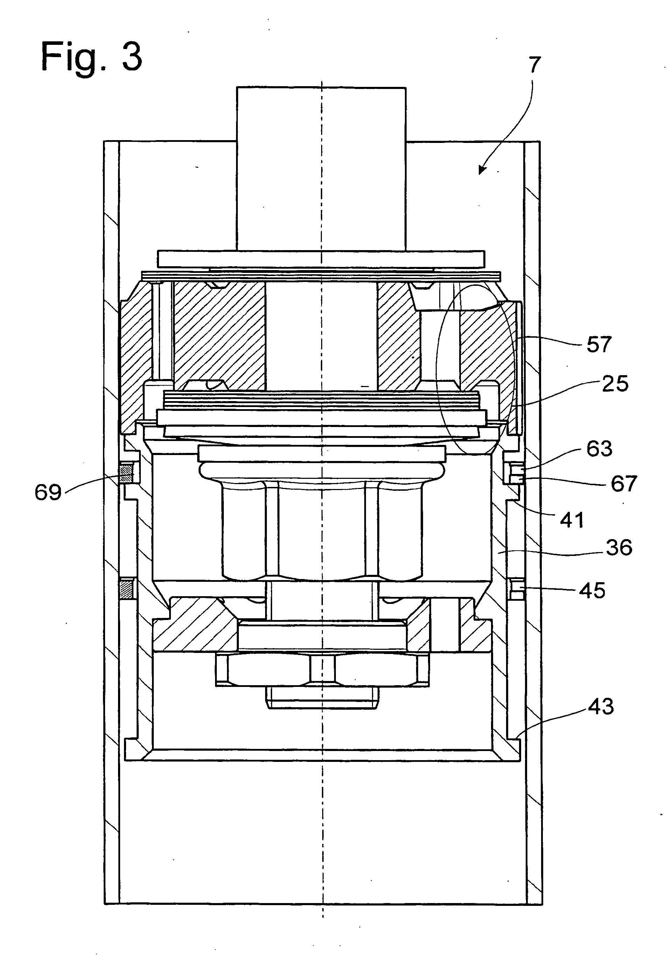

Die Fig. 3 stellt den Betriebszustand dar, wenn die Kolbenstange 5 ausfährt und der wie der Schaltring 45 radial vorgespannte und damit reibkraftgesteuerte Drosselring 63 mit seiner unteren Deckseite an der Nutseitenwand der Drosselringnut 69 zur Anlage kommt, so dass der Voröffnungsquerschnitt 67 wirksam ist, hingegen der Schaltring bei einer zu den Anschlagflächen 41; 43 beabstandeten Position mit dem Voröffnungsquerschnitt 61 keine Wirkung entfaltet. Das Dämpfmittel kann in umgekehrter Strömungsrichtung über die mindestens eine Axialnut 57 in die Drosselringnut 69 einströmen und durch den Voröffnungsquerschnitt 67 den Ringraum zwischen dem hülsenförmigen Grundkörper 36 und der Innenwandung des Zylinders 3 erreichen.

Die Fig. 4 zeigt den Zustand der Kolbenanordnung 7, bei dem der Schaltring 45 bei weiterer Kolbenstangenausfahrbewegung an der Anschlagfläche 43 zur Anlage gekommen ist und der Voröffnungsquerschnitt 61 die Dämpfkraftkennlinie bestimmt. Hydraulisch parallel geschaltet ist das Zugstufenventil 25. Durch den Abstand der beiden Anschlagflächen 41; 43 kann die Dämpfkraftkennlinien insbesondere im Bereich kleiner Kolbenstangengeschwindigkeiten beeinflusst werden.

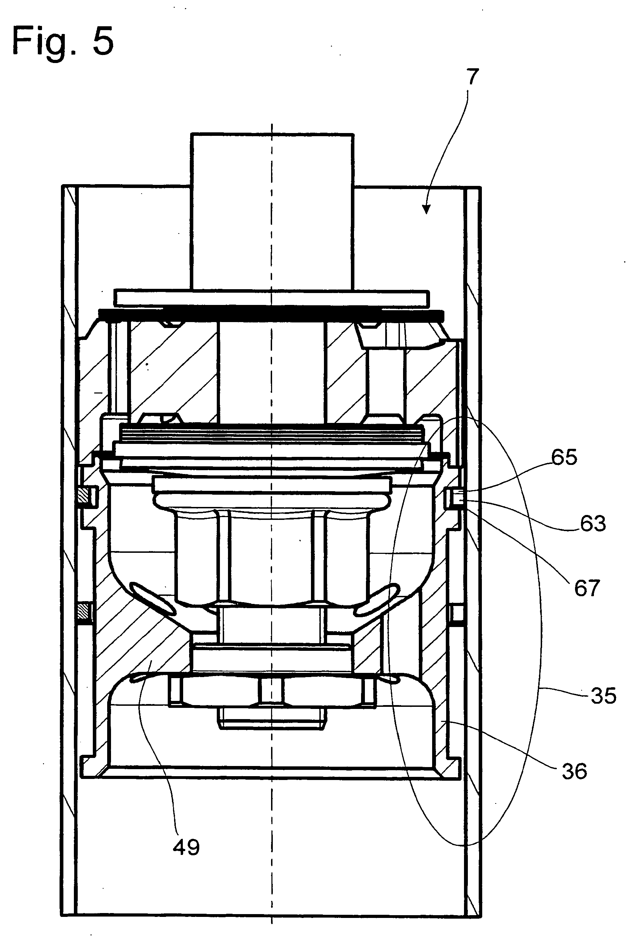

Die Fig. 5 zeigt eine im Vergleich zu den Fig. 1 bis 4 vereinfachte Variante einer Kolbenanordnung 7. Abweichend ist der Drosselring axial nicht beweglich, d. h. dass für beide Strömungsrichtungen ein identischer Voröffnungsquerschnitt 65; 67 zur Anwendung kommt. Ein weiterer wesentlicher Unterschied besteht darin, dass die Haltescheibe 49 der Baugruppe 35 einteilig mit dem hülsenförmigen Grundkörper 36 ausgeführt ist.

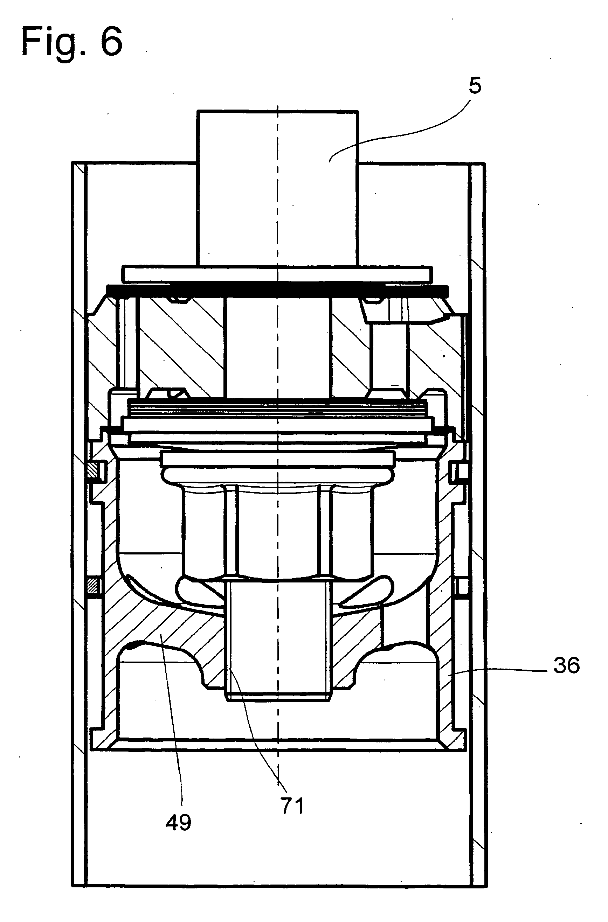

Mit der Fig. 6 wird eine Lösung gezeigt, die bezüglich der Einteiligkeit der Haltescheibe 49 mit dem hülsenförmigen Grundkörper 36 mit der Fig. 5 identisch ist. Abweichend ist die Haltescheibe direkt über ein Gewinde 71 mit der Kolbenstange 5 verbunden.

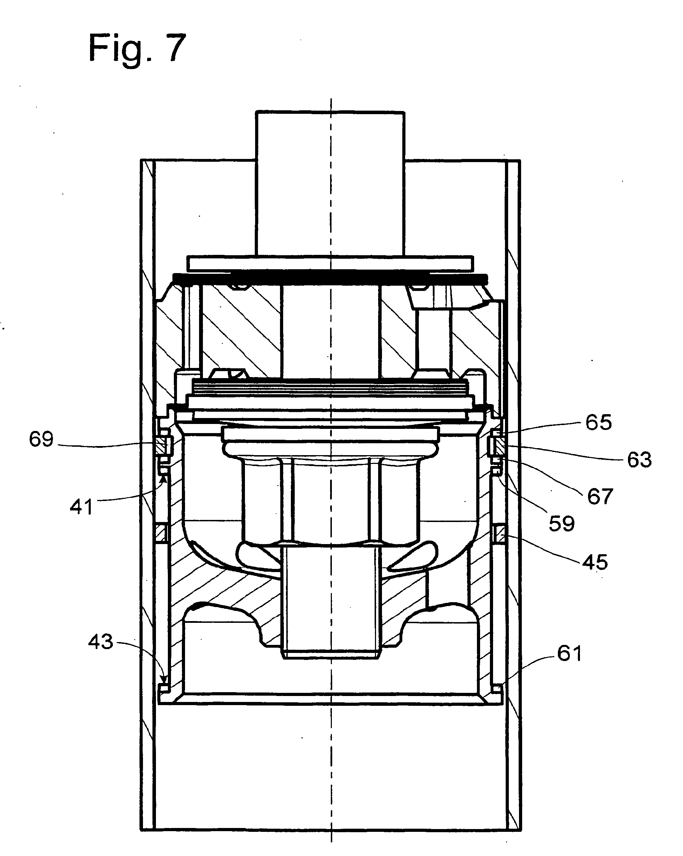

In den bisherigen Varianten sind die Voröffnungsquerschnitte 59; 61; im Schaltring 45 und die Voröffnungsquerschnitte 65; 67 im Drosselring 63 jeweils durch Vertiefungen ausgeführt. in der Fig. 7 wurden die besagten Voröffnungsquerschnitte als Vertiefungen in den jeweiligen Anschlagflächen 41; 43, bzw. den Nutseitenwänden der Drosselringnut 69 eingearbeitet.

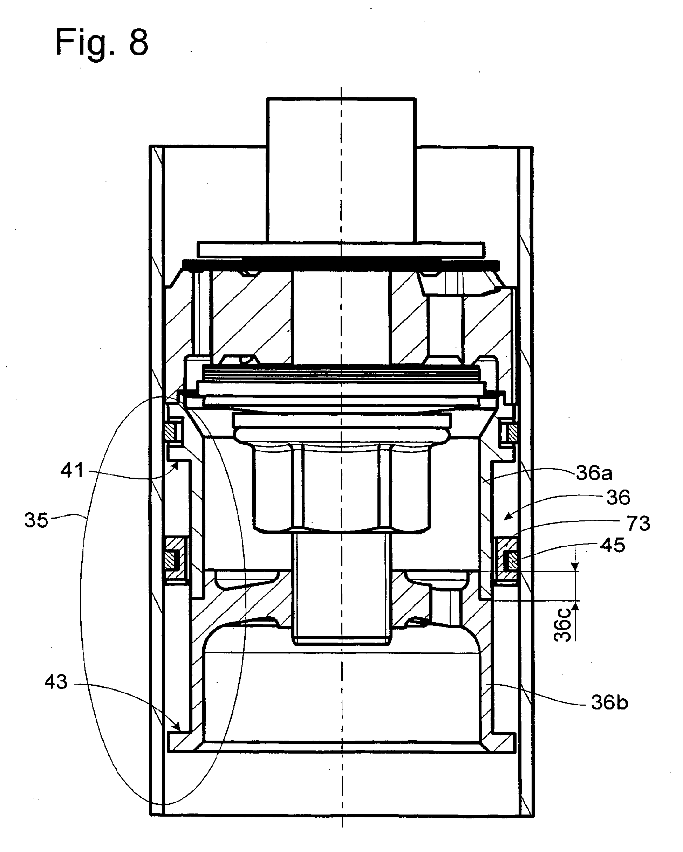

Die Fig. 8 offenbart eine erfindungsgemäße Ausführungsform, bei der der hülsenförmige Grundkörper 36 mehrteilig ausgeführt ist, wobei die Teilungsfuge zwischen den Anschlagflächen 41; 43 verläuft. Ein erster Teilabschnitt 36a und ein zweiten Teilabschnitt 36 b stehen in axialer Überdeckung 36c miteinander. Zwischen den beiden Teilabschnitten liegt im Bereich der axialen Überdeckung eine Presspassung vor, so dass trotz der Zweiteilung eine in sich geschlossene Baugruppe 35 vorliegen kann. Die Zweiteilung des hülsenförmigen Grundkörpers 36 begünstigt den Einsatz eines ungeschlitzten Schaltringes 45. Der Schaltring 45 ist in einem Trägerring 73 gekammert, der an den Anschlagflächen 41, 43 zur Anlage kommt. Auch die Voröffnungsquerschnitte 59; 61 können im Trägerring ausgeführt sein. Der Trägerring kann aus einem härteren Werkstoff als der Schaltring bestehen, da die Dichtwirkung vom Schaltring übernommen wird.

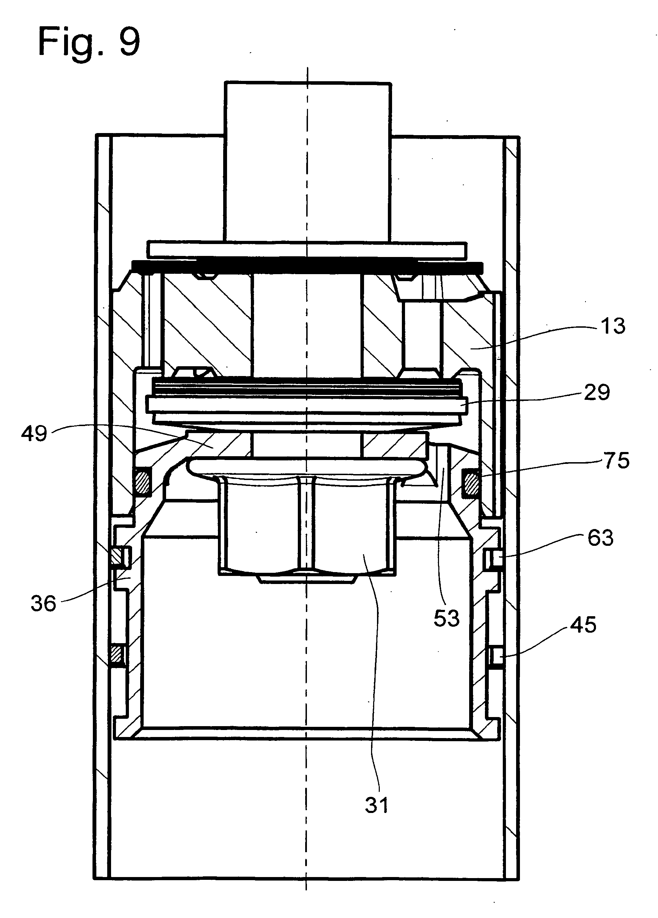

Die Figur 9 zeigt eine weitere Abwandlung zu den bisherigen Figuren. Ein wesentlicher Unterschied besteht darin, dass die Haltescheibe 49 des hülsenförmigen Grundkörpers 36 von der Kolbenmutter 31 direkt auf die Stützscheibe 29 und damit direkt mit dem Kolbenkörper 13 verspannt. Damit das Dämpfmittel, insbesondere bei einer Kolbenstangenausfahrbewegung, über die Dämpfmitteldurchlassöffnungen 53 den Schaltring 45 und den Drosselring 63 nicht hydraulisch überbrückt, ist zwischen dem hülsenförmigen Grundkörper 36 und dem Kolbenkörper 13 mindestens eine Dichtung 75 angeordnet.

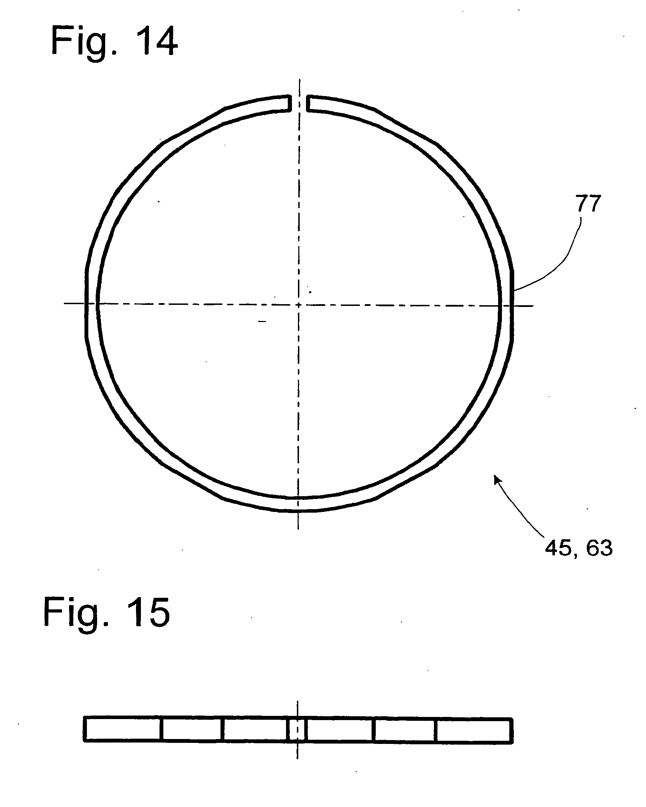

Die Figuren 14 und 15 zeigen eine im Vergleich zu den Fig. 10 bis 13 vereinfachte Ausführung eines Drossel- oder Schaltrings 63; 45. Der wesentliche Unterschied besteht darin, dass der Ring an seine Außendurchmesser Durchmesserreduzierungen 77 oder auch Nuten aufweist, die zusammen mit der Innenwandung des Zylinders als Voröffnungsquerschnitte wirksam werden.

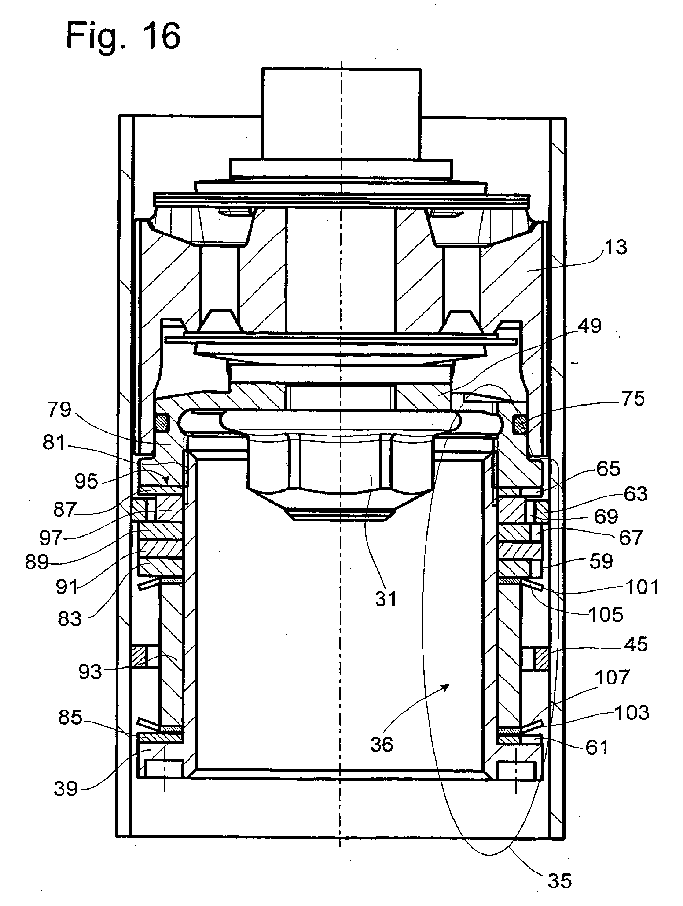

Die Fig. 16 zeigt eine Abwandlung der Ausführung nach Fig. 9. Ein wesentlicher Unterschied besteht darin, dass der Drosselring 63 innerhalb der Baugruppe 35 angeordnet ist und nicht im Kolbenkörper 13. Des weiteren verfügt die Haltescheibe 49 der Baugruppe 35 über einen Befestigungsflansch 79 für den hülsenförmigen Grundkörper 36, wobei zwischen dem Befestigungsflansch und dem hülsenförmigen Grundkörper eine Gewindeverbindung 81 vorliegt. Der Grundkörper ist praktisch zweitgeteilt. Die Dichtung 75 zum Kolbenkörper ist ebenfalls in dem Befestigungsflansch angeordnet ist.

Die Voröffnungsquerschnitt 65; 67 für den Drosselring 63 und die Voröffnungsquerschnitte 59; 61, die der Schaltring 45 steuert, werden von Einlegescheiben 83; 85; 87; 89 gebildet, die jeweils am Außendurchmesser entsprechende Aussparungen aufweisen. Zwischen den beiden benachbarten Einlegescheiben 83, 89 ist noch eine Distanzscheibe 91 angeordnet.

Mindestens eine Einlegescheibe wird von einer konzentrisch zum hülsenförmigen Grundkörper 36 befindlichen Spannhülse 93 fixiert. Der hülsenförmige Grundkörper mit seinem Ringsteg 39 sorgt zusammen mit einer Stirnfläche 95 der Haltescheibe für eine Verspannungskette, wobei die Länge der Spannhülse 93 den maximalen Hub des Schaltrings 45 bestimmt. Bei der Montage werden die Einlegescheiben, die Spannhülse, der Distanzring und ein zum Drosselring koaxial angeordneter Zwischenring 97, der die Höhe und radiale Tiefe der Drosselringnut 69 bestimmt, auf den hülsenförmigen Grundkörper 36 aufgefädelt und über die Gewindeverbindung 81 zum Befestigungsflansch 79 der Haltescheibe 49 verspannt.

Im rechten Halbschnitt der Fig. 16 kommen zusätzlich Federelemente 101; 103 zur Anwendung, die mindestens eine Endlage des Schaltrings bedämpfen sollen, um Anschlaggeräusche an der Einlegescheibe 83; 85 zu minimieren. Die Federelemente 101, 103 werden von Federscheiben gebildet, die mindestens eine Aussparung 105; 107 aufweisen, die größer sind als der Voröffnungsquerschnitt 59; 61 in den Einlegescheiben 83; 85.

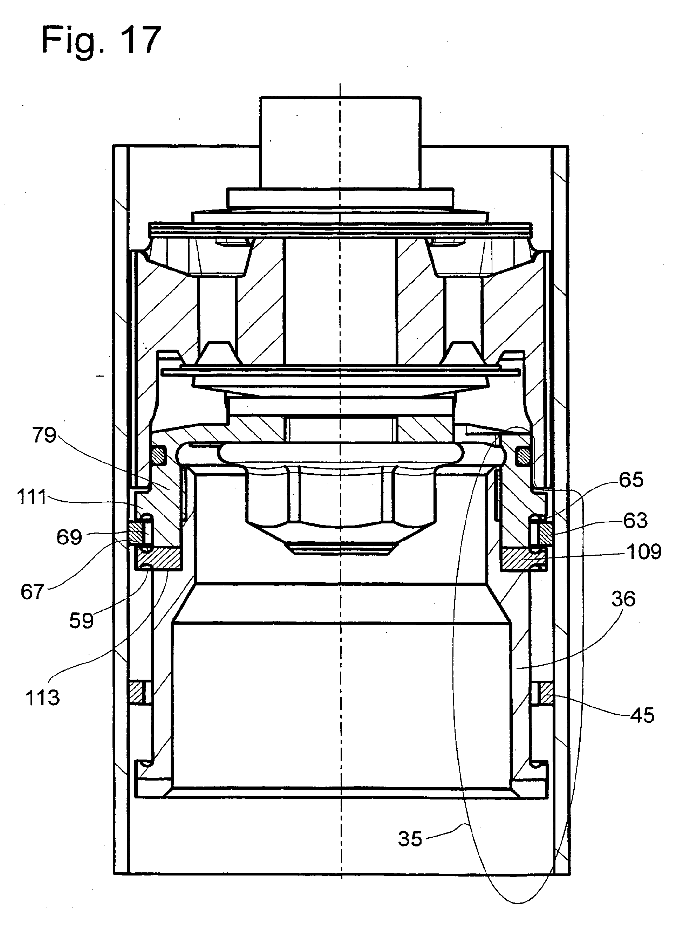

Die Ausführung nach der Fig. 17 ist im Vergleich zur Fig. 16 dahingehend abgewandelt, dass die Funktion der Einlegescheiben 83 und 89, sowie der Distanzscheibe 91 in einem Zwischenring 109 zusammengefasst ist. An dem Zwischenring lassen sich sehr einfach die Voröffnungsquerschnitte 59; 67 anprägen. An dem Befestigungsflansch 79 ist ein Absatz 111 ausgeführt, der einerseits die Drosselringnut 69 axial und radial begrenzt und in dem der Voröffnungsquerschnitt 65 eingearbeitet ist. Die Haltescheibe weist keine Hinterschneidungen auf und lässt sich deshalb auch sehr gut spritztechnisch oder in einem Sinterverfahren herstellen. Der Zwischenring 109 stützt sich auf einer Stirnfläche 113 des hülsenförmigen Grundkörpers ab. Die Haltescheibe mit dem Befestigungsflansch 79 und der hülsenförmige Grundkörper 36 verspannen den Zwischenring, wobei der Drosselring 63 und der Schaltring 45 über die jeweils offenen Enden aufgefädelt werden können. Ein Schlitz zur radialen Aufweitung ist in den Ringen 45; 63 nicht notwendig. Die gesamte Baueinheit 35 kann unabhängig von dem gesamten Kolben gefertigt werden.

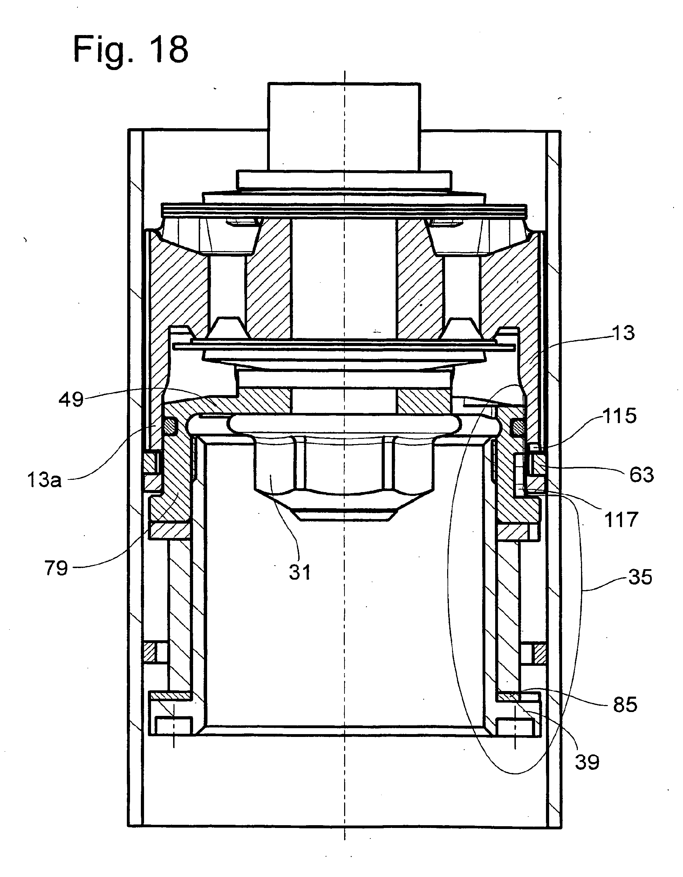

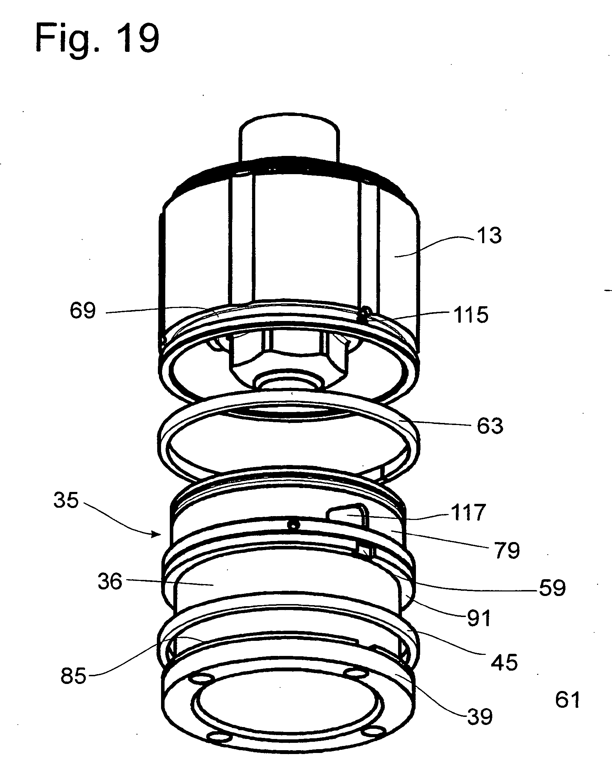

Die Fig. 18 und 19 beschreiben eine Ausführungsform der Erfindung, bei der der Voröffnungsquerschnitt am Drosselring 63 einstellbar ist. Die Voröffnungsquerschnitte 63 und 63 sind in den vorstehend beschriebenen Varianten im Rahmen der Herstellungstoleranz gleich groß ausgeführt. Der Voröffnungsquerschnitt gemäß Fig. 18 und 19 wird von zwei Bauteilen, nämlich dem Kolbenkörper 13 und dem Befestigungsflansch 79 innerhalb der Baugruppe 35 gebildet, die relativ zueinander verstellbar sind. Der Befestigungsflansch als Teil der Haltescheibe 49 kann nach Lösen der Kolbenmutter 31 in Umfangsrichtung zum Kolbenkörper 13 verdreht werden. Innerhalb eines Kolbenhemdes 13a ist eine Steueröffnung 115 mit Anschluss an die Drosselringnut 69 ausgeführt. In dem Befestigungsflansch 79 ist eine Tasche 117 eingeformt, die in Überdeckung mit der Steueröffnung 115 gebracht werden kann. Damit bildet der Befestigungsflansch funktional einen Steuerschieber, der zusammen mit der Steueröffnung den verstellbaren Voröffnungsquerschnitt bestimmt.

## Patentansprüche

1. Schwingungsdämpfer mit amplitudenselektiver Dämpfkraft, umfassend eine Kolbenstange, die in einem dämpfmittelgefüllten Zylinder axial beweglich geführt ist, wobei die Kolbenstange eine Kolbenanordnung trägt, die den Zylinder in einen kolbenstangenseitigen und einen kolbenstangenfernen Arbeitsraum unterteilt, wobei zwischen den Arbeitsräumen eine Strömungsverbindung vorliegt, die von einem axial beweglichen Schaltring (45) in Abhängigkeit von der Kolbenstangenbewegung gesteuert wird, wobei der Schaltweg des Schaltrings von zwei Anschlagflächen begrenzt wird, die außerhalb eines mit Ventilscheiben bestückten Kolbenkörpers der Kolbenanordnung ausgeführt sind, wobei beide Anschlagflächen (41; 43) von einer zum Kolbenkörper (13) und den Ventilscheiben (19; 21) unabhängigen Baugruppe (35) bereitgestellt werden.
wobei sich die Baugruppe (35) am Kolbenkörper (13) axial fixiert abstützt.

2. Schwingungsdämpfer nach Anspruch 1,
**dadurch gekennzeichnet,**
**dass** die Baugruppe (35) einen hülsenförmige Grundkörper (36) aufweist.

3. Schwingungsdämpfer nach Anspruch 2,
**dadurch gekennzeichnet,**
**dass** der hülsenförmige Grundkörper (36) Ringstege (37; 39) aufweist, an denen die Anschlagflächen (41; 43) für den Schaltring (45) ausgeführt sind.

4. Schwingungsdämpfer nach Anspruch 1,
**dadurch gekennzeichnet,**
**dass** der Kolbenkörper (13) eine Zentrierung (47) für die Baugruppe (35) aufweist.

5. Schwingungsdämpfer nach Anspruch 2,
**dadurch gekennzeichnet,**
**dass** der hülsenförmige Grundkörper (36) mehrteilig ausgeführt ist, wobei eine Teilungsfuge axial zwischen den Anschlagflächen (41; 43) verläuft.

6. Schwingungsdämpfer nach Anspruch 5,
**dadurch gekennzeichnet,**
**dass** ein erster Teilabschnitt (36a) des hülsenförmigen Grundkörpers (36) in axialer Überdeckung (36c) über eine Presspassung mit einem zweiten Teilabschnitt (36b) in Verbindung steht.

7. Schwingungsdämpfer nach Anspruch 1,
**dadurch gekennzeichnet,**
**dass** die Baugruppe (35) zum Kolbenkörper (13) durch mindestens eine Dichtung (75) abgedichtet wird.

8. Schwingungsdämpfer nach Anspruch 1,
**dadurch gekennzeichnet,**
**dass** eine Mantelfläche des Kolbenkörpers (13) mindestens eine Axialnut (57) aufweist, die in die Strömungsverbindung zwischen den beiden Arbeitsräumen (9; 11) mündet.

9. Schwingungsdämpfer nach Anspruch 1,
**dadurch gekennzeichnet,**
**dass** die Kolbenanordnung (7) einen Drosselring (45) aufweist, den mindestens einen ersten Voröffnungsquerschnitt (65; 67) bestimmt.

10. Schwingungsdämpfer nach Anspruch 1,
**dadurch gekennzeichnet,**
**dass** die Baugruppe (35) einen Drosselring (45) aufweist, der mindestens einen ersten Voröffnungsquerschnitt (65; 67) bestimmt.

11. Schwingungsdämpfer nach den Ansprüchen 9 oder 10,
**dadurch gekennzeichnet,**
**dass** der Drosselring (63) in Grenzen axial beweglich ausgeführt ist und in Abhängigkeit der Bewegungsrichtung des Drosselringes (63) zwei Voröffnungsquerschnitte (65; 67) bestimmt.

12. Schwingungsdämpfer nach Anspruch 11,
**dadurch gekennzeichnet,**
**dass** der Drosselring (63) in einer Drosselringnut (69) der Baugruppe (35) axial beweglich ausgeführt ist.

13. Schwingungsdämpfer nach Anspruch 9,
**dadurch gekennzeichnet,**
**dass** der Schaltring (45) einen zum Drosselring (63) zusätzlichen Voröffnungsquerschnitt (59; 61) bestimmt, der bei Anlage an eine der Anschlagflächen (41; 43) wirksam wird.

14. Schwingungsdämpfer nach Anspruch 13,
**dadurch gekennzeichnet,**
**dass** Voröffnungsquerschnitt (65; 67), der vom Drosselring (63) bestimmt wird, größer ist als der Voröffnungsquerschnitt (59; 61), der bei Anlage des Schaltrings (45) wirksam ist.

15. Schwingungsdämpfer nach Anspruch 13,
**dadurch gekennzeichnet,**
**dass** die Voröffnungsquerschnitte (59; 61; 65; 67) in dem Drosselring (63) und/oder dem Schaltring (45) ausgeführt sind.

16. Schwingungsdämpfer nach Anspruch 15,
**dadurch gekennzeichnet,**
**dass** die Voröffnungsquerschnitte (59; 61; 65; 67) durch Durchmesserreduzierungen (77) am Außendurchmesser ausgeführt sind.

17. Schwingungsdämpfer nach Anspruch 1,
**dadurch gekennzeichnet,**
**dass** die Voröffnungsquerschnitte (59; 61; 65; 67) als Vertiefung in den Anschlagflächen (41; 43) ausgeformt sind.

18. Schwingungsdämpfer nach Anspruch 1,
**dadurch gekennzeichnet,**
**dass** der Schaltring (45) in einem Trägerring (73) gekammert, der an den Anschlagflächen (41; 43) zur Anlage kommt.

19. Schwingungsdämpfer nach Anspruch 2,
**dadurch gekennzeichnet,**
**dass** der hülsenförmige Grundkörper (36) über eine Haltescheibe (49) an der Kolbenstange (5) fixiert ist.

20. Schwingungsdämpfer nach Anspruch 19,
**dadurch gekennzeichnet,**
**dass** die Haltescheibe (49) mit mindestens einem Dämpfmitteldurchlassöffnung (53) ausgeführt ist.

21. Schwingungsdämpfer nach Anspruch 19,
**dadurch gekennzeichnet,**
**dass** die Haltescheibe (49) einteilig mit dem hülsenförmigen Grundkörper (36) ausgeführt ist.

22. Schwingungsdämpfer nach Anspruch 1,
**dadurch gekennzeichnet,**
**dass** die Baugruppe (35) separat zu einer Verspannungskette der Kolbenanordnung (7), die von einer Kolbenmutter (31) fixiert ist, gehalten wird.

23. Schwingungsdämpfer nach Anspruch 19,
**dadurch gekennzeichnet,**
**dass** die Haltescheibe (49) der Baugruppe (35) über ein Gewinde (71) mit der Kolbenstange (5) verbunden ist.

24. Schwingungsdämpfer nach Anspruch 9,
**dadurch gekennzeichnet,**
**dass** mindestens ein Voröffnungsquerschnitt (65; 67) für den Drosselring (63) von einer Einlegescheibe (87; 89) gebildet wird.

25. Schwingungsdämpfer nach Anspruch 12,
**dadurch gekennzeichnet,**
**dass** mindestens ein Voröffnungsquerschnitt (59; 61) für den Schaltring (45) von einer Einlegescheibe(83; 85) gebildet wird.

26. Schwingungsdämpfer nach den Ansprüchen 23 und 24,
**dadurch gekennzeichnet,**
**dass** ein Voröffnungsquerschnitt (67) für den Drosselring (63) und ein Voröffnungsquerschnitt (59) für den Schaltring (45) von einem Zwischenring (109) gebildet werden.

27. Schwingungsdämpfer nach den Ansprüchen 23 oder 24,
**dadurch gekennzeichnet,**
**dass** die mindestens eine Einlegescheibe (87; 89; 83; 85) zwischen dem axial geteilten hülsenförmigen Grundkörper (36) verspannt ist.

28. Schwingungsdämpfer nach einem der Ansprüche 24 oder 25,
**dadurch gekennzeichnet,**
**dass** konzentrisch zum hülsenförmigen Grundkörper (36) eine Spannhülse (93) die mindestens eine Einlegescheibe (87; 89; 83; 85) fixiert.

29. Schwingungsdämpfer nach Anspruch 1,
**dadurch gekennzeichnet,**
**dass** der Schaltring (45) in mindestens einer Endlage von einem Federelement (101; 103) gedämpft wird.

30. Schwingungsdämpfer nach Anspruch 28,
**dadurch gekennzeichnet,**
**dass** das Federelement (101; 103) von einer Federscheibe gebildet wird.

31. Schwingungsdämpfer nach Anspruch 29,
**dadurch gekennzeichnet,**
**dass** die Federscheibe (101; 103) mit mindestens einer Aussparung (105; 107) versehen ist, die größer ist als der Voröffnungsquerschnitt (59; 61), der von dem Schaltring (45) angesteuert wird.

32. Schwingungsdämpfer nach Anspruch 18,
**dadurch gekennzeichnet,**
**dass** die Haltescheibe (49) mit einem Befestigungsflansch (79) für den hülsenförmigen Grundkörper (36) ausgeführt ist.

33. Schwingungsdämpfer nach Anspruch 31,
**dadurch gekennzeichnet,**
**dass** zwischen dem Befestigungsflansch (79) und dem hülsenförmigen Grundkörper (36) eine Gewindeverbindung (81) vorliegt.

34. Schwingungsdämpfer nach Anspruch 9,
**dadurch gekennzeichnet,**
**dass** der Voröffnungsquerschnitt, der mit dem Drosselring (63) zusammenwirkt, einstellbar ist.

35. Schwingungsdämpfer nach Anspruch 33,
**dadurch gekennzeichnet,**
**dass** der Voröffnungsquerschnitt von zwei Bauteilen (13; 79) gebildet wird, die relativ zueinander verstellbar sind.

36. Schwingungsdämpfer nach Anspruch 34,
**dadurch gekennzeichnet,**
**dass** ein Bauteil von dem Kolbenkörper (13) und ein Bauteil (79) von der Baugruppe (35) gebildet wird.

37. Schwingungsdämpfer nach Anspruch 34,
**dadurch gekennzeichnet,**
**dass** die Drosselringnut (69) für den Drosselring (63) eine Steueröffnung (159) aufweist, deren Überdeckung mit einem Steuerschieber (79) den verstellbaren Voröffnungsquerschnitt bildet.

## Claims

1. Vibration damper with amplitude-dependent damping force, comprising a piston rod which is guided axially movably in a cylinder filled with damping medium, with the piston rod carrying a piston arrangement which subdivides the cylinder into a working space located on the piston-rod side and a working space remote from the piston rod, there being between the working spaces a flow connection which is controlled by an axially movable switching ring (45) as a function of the piston-rod movement, the switching travel of the switching ring being limited by two stop faces which are formed outside a piston body, equipped with valve discs, of the piston arrangement, the two stop faces (41; 43) being provided by a subassembly (35) independent of the piston body (13) and of the valve discs (19; 21), the subassembly (35) being supported, axially fixed, on the piston body (13).

2. Vibration damper according to Claim 1, **characterized in that** the subassembly (35) has a sleeve-shaped basic body (36).

3. Vibration damper according to Claim 2, **characterized in that** the sleeve-shaped basic body (36) has annular webs (37; 39) on which the stop faces (41; 43) for the switching ring (45) are formed.

4. Vibration damper according to Claim 1, **characterized in that** the piston body (13) has centring (47) for the subassembly (35).

5. Vibration damper according to Claim 2, **characterized in that** the sleeve-shaped basic body (36) is of multi-part form, with a dividing join running axially between the stop faces (41; 43).

6. Vibration damper according to Claim 5, **characterized in that** a first portion (36a) of the sleeve-shaped basic body (36) is connected in axial overlap (36c), via a press fit, to a second portion (36b).

7. Vibration damper according to Claim 1, **characterized in that** the subassembly (35) is sealed off with respect to the piston body (13) by means of at least one seal (75).

8. Vibration damper according to Claim 1, **characterized in that** a lateral surface of the piston body (13) has at least one axial groove (57) which issues in the flow connection between the two work spaces (9; 11).

9. Vibration damper according to Claim 1, **characterized in that** the piston arrangement (7) has a throttle ring (45) which determines at least one first pre-opening cross section (65; 67).

10. Vibration damper according to Claim 1, **characterized in that** the subassembly (35) has a throttle ring (45) which determines at least one first pre-opening cross section (65; 67).

11. Vibration damper according to either one of Claims 9 and 10, **characterized in that** the throttle ring (63) is designed to be axially movable within limits and determines two pre-opening cross sections (65; 67) as a function of the direction of movement of the throttle ring (63).

12. Vibration damper according to Claim 11, **characterized in that** the throttle ring (63) is designed to be axially movable in a throttle-ring groove (69) of the subassembly (35).

13. Vibration damper according to Claim 9, **characterized in that** the switching ring (45) determines a pre-opening cross section (59; 61) which is additional to the throttle ring (63) and which is effective in the case of bearing contact against one of the stop faces (41; 43).

14. Vibration damper according to Claim 13, **characterized in that** the pre-opening cross section (65; 67) which is determined by the throttle ring (63) is larger than the pre-opening cross section (59; 61) which is effective when the switching ring (45) comes into bearing contact.

15. Vibration damper according to Claim 13, **characterized in that** the pre-opening cross sections (59; 61; 65; 67) are formed in the throttle ring (63) and/or in the switching ring (45).

16. Vibration damper according to Claim 15, **characterized in that** the pre-opening cross sections (59; 61; 65; 67) are formed by diameter reductions (77) on the outside diameter.

17. Vibration damper according to Claim 1, **characterized in that** the pre-opening cross sections (59; 61; 65; 67) are formed as a depression in the stop faces (41; 43).

18. Vibration damper according to Claim 1, **characterized in that** the switching ring (45) is housed in a carrier ring (73) which comes to bear against the stop faces (41; 43).

19. Vibration damper according to Claim 2, **characterized in that** the sleeve-shaped basic body (36) is fixed to the piston rod (5) via a holding disc (49).

20. Vibration damper according to Claim 19, **characterized in that** the holding disc (49) is designed with at least one damping-medium passage orifice (53).

21. Vibration damper according to Claim 19, **characterized in that** the holding disc (49) is formed in one piece with the sleeve-shaped basic body (36).

22. Vibration damper according to Claim 1, **characterized in that** the subassembly (35) is held separately to a bracing chain of the piston arrangement (7) which is fixed by a piston nut (31).

23. Vibration damper according to Claim 19, **characterized in that** the holding disc (49) of the subassembly (35) is connected to the piston rod (5) via a thread (71).

24. Vibration damper according to Claim 9, **characterized in that** at least one pre-opening cross section (65; 67) for the throttle ring (63) is formed by an insertion disc (87; 89).

25. Vibration damper according to Claim 12, **characterized in that** at least one pre-opening cross section (59; 61) for the switching ring (45) is formed by an insertion disc (83; 85).

26. Vibration damper according to Claims 23 and 24, **characterized in that** a pre-opening cross section (67) for the throttle ring (63) and a pre-opening cross section (59) for the switching ring (45) are formed by an intermediate ring (109).

27. Vibration damper according to either one of Claims 23 and 24, **characterized in that** the at least one insertion disc (87; 89; 83; 85) is braced between the axially divided sleeve-shaped basic body (36).

28. Vibration damper according to either one of Claims 24 and 25, **characterized in that** a clamping sleeve (93) fixes the at least one insertion disc (87; 89; 83; 85) concentrically with respect to the sleeve-shaped basic body (36).

29. Vibration damper according to Claim 1, **characterized in that** the switching ring (45) is damped, in at least one end position, by a spring element (101; 103).

30. Vibration damper according to Claim 28, **characterized in that** the spring element (101; 103) is formed by a spring washer.

31. Vibration damper according to Claim 29, **characterized in that** the spring washer (101; 103) is provided with at least one clearance (105; 107) which is larger than the pre-opening cross section (59; 61) which is activated by the switching ring (45).

32. Vibration damper according to Claim 18, **characterized in that** the holding disc (49) is designed with a fastening flange (79) for the sleeve-shaped basic body (36).

33. Vibration damper according to Claim 31, **characterized in that** a threaded connection (81) is present between the fastening flange (79) and the sleeve-shaped basic body (36).

34. Vibration damper according to Claim 9, **characterized in that** the pre-opening cross section which cooperates with the throttle ring (63) is adjustable.

35. Vibration damper according to Claim 33, **characterized in that** the pre-opening cross section is formed by two components (13; 79) which are adjustable in relation to one another.

36. Vibration damper according to Claim 34, **characterized in that** one component is formed by the piston body (13) and one component (79) is formed by the subassembly (35).

37. Vibration damper according to Claim 34, **characterized in that** the throttle-ring groove (69) for the throttle ring (63) has a control orifice (159), of which the overlap with a control slide (79) forms the adjustable pre-opening cross section.

## Revendications

1. Amortisseur de vibrations avec une force d'amortissement dépendant de l'amplitude, comprenant une tige de piston qui est guidée de manière mobile axialement dans un cylindre rempli de milieu amortisseur, la tige de piston portant un agencement de piston qui divise le cylindre en un espace de travail du côté de la tige de piston et un espace de travail éloigné de la tige de piston, une connexion fluidique étant établie entre les deux espaces de travail, laquelle est commandée par une bague de commutation mobile axialement (45) en fonction du mouvement de la tige de piston, la course de commutation de la bague de commutation étant limitée par deux surfaces de butée qui sont réalisées en dehors d'un corps de piston de l'agencement de piston muni de disques de soupapes, les deux surfaces de butée (41 ; 43) étant fournies par un module (35) indépendant du corps de piston (13) et des disques de soupape (19 ; 21),
le module (35) s'appuyant avec fixation axiale sur le corps de piston (13).

2. Amortisseur de vibrations selon la revendication 1,
**caractérisé en ce que**
le module (35) présente un corps de base (36) en forme de douille.

3. Amortisseur de vibrations selon la revendication 2,
**caractérisé en ce que**
le corps de base en forme de douille (36) présente des nervures annulaires (37 ; 39) sur lesquelles sont réalisées les surfaces de butée (41 ; 43) pour la bague de commutation (45).

4. Amortisseur de vibrations selon la revendication 1,
**caractérisé en ce que**
le corps de piston (13) présente un centrage (47) pour le module (35).

5. Amortisseur de vibrations selon la revendication 2,
**caractérisé en ce que**
le corps de base (36) en forme de douille est réalisé en plusieurs parties, un joint de séparation s'étendant axialement entre les surfaces de butée (41 ; 43).

6. Amortisseur de vibrations selon la revendication 5,
**caractérisé en ce**
**qu'**une première portion partielle (36a) du corps de base (36) en forme de douille est en liaison avec une deuxième portion partielle (36b) avec recouvrement axial (36c) par le biais d'un ajustement serré.

7. Amortisseur de vibrations selon la revendication 1,
**caractérisé en ce que**
le module (35) est rendu étanche par rapport au corps de piston (13) par au moins un joint d'étanchéité (75).

8. Amortisseur de vibrations selon la revendication 1,
**caractérisé en ce**
**qu'**une surface d'enveloppe du corps de piston (13) présente au moins une rainure axiale (57), qui débouche dans la connexion fluidique entre les deux espaces de travail (9 ; 11).

9. Amortisseur de vibrations selon la revendication 1,
**caractérisé en ce que**
l'agencement de piston (7) présente une bague d'étranglement (63) qui définit au moins une première section transversale de pré-ouverture (65 ; 67).

10. Amortisseur de vibrations selon la revendication 1,
**caractérisé en ce que**
le module (35) présente une bague d'étranglement (63) qui définit au moins une première section transversale de pré-ouverture (65 ; 67).

11. Amortisseur de vibrations selon les revendications 9 ou 10,
**caractérisé en ce que**
la bague d'étranglement (63) est réalisée de manière mobile axialement dans certaines limites, et définit, en fonction de la direction du mouvement de la bague d'étranglement (63), deux sections transversales de pré-ouverture (65 ; 67).

12. Amortisseur de vibrations selon la revendication 11,
**caractérisé en ce que**
la bague d'étranglement (63) est réalisée de manière mobile axialement dans une rainure annulaire d'étranglement (69) du module (35).

13. Amortisseur de vibrations selon la revendication 9,
**caractérisé en ce que**
la bague de commutation (45) définit une section transversale de pré-ouverture (59 ; 61) en plus de la bague d'étranglement (63), qui agit lors de l'application contre l'une des surfaces de butée (41 ; 43).

14. Amortisseur de vibrations selon la revendication 13,
**caractérisé en ce que**
la section transversale de pré-ouverture (65 ; 67) qui est définie par la bague d'étranglement (63), est supérieure à la section transversale de pré-ouverture (59 ; 61) qui agit lors de l'application de la bague de commutation (45).

15. Amortisseur de vibrations selon la revendication 13,
**caractérisé en ce que**
les sections transversales de pré-ouverture (59, 61 ; 65 ; 67) sont réalisées dans la bague d'étranglement (63) et/ou dans la bague de commutation (45).

16. Amortisseur de vibrations selon la revendication 15,
**caractérisé en ce que**
les sections transversales de pré-ouverture (59 ; 61 ; 65 ; 67) sont réalisées par des réductions de diamètre (77) au niveau du diamètre extérieur.

17. Amortisseur de vibrations selon la revendication 1,
**caractérisé en ce que**
les sections transversales de pré-ouverture (59 ; 61 ; 65 ; 67) sont façonnées sous forme de renfoncement dans les surfaces de butée (41 ; 43).

18. Amortisseur de vibrations selon la revendication 1,
**caractérisé en ce que**
la bague de commutation (45) s'engrène dans une bague de support (73) qui vient en appui contre les surfaces de butée (41 ; 43).

19. Amortisseur de vibrations selon la revendication 2,
**caractérisé en ce que**
le corps de base (36) en forme de douille est fixé par le biais d'une rondelle de retenue (49) sur la tige de piston (5).

20. Amortisseur de vibrations selon la revendication 19,
**caractérisé en ce que**
la rondelle de retenue (49) est réalisée avec au moins une ouverture de passage de milieu amortisseur (53).

21. Amortisseur de vibrations selon la revendication 19,
**caractérisé en ce que**
la rondelle de retenue (49) est réalisée d'une seule pièce avec le corps de base (36) en forme de douille.

22. Amortisseur de vibrations selon la revendication selon la revendication 1,
**caractérisé en ce que**
le module (35) est maintenu séparément d'une chaîne de tension de l'agencement de piston (7), qui est fixée par un écrou de piston (31).

23. Amortisseur de vibrations selon la revendication 19,
**caractérisé en ce que**
la rondelle de fixation (49) du module (35) est connectée par le biais d'un filetage (71) à la tige de piston (5).

24. Amortisseur de vibrations selon la revendication selon la revendication 9,
**caractérisé en ce**
**qu'**au moins une section transversale de pré-ouverture (65 ; 67) est formée pour la bague d'étranglement (63) par une rondelle d'insertion (87 ; 89).

25. Amortisseur de vibrations selon la revendication 12,
**caractérisé en ce**
**qu'**au moins une section transversale de pré-ouverture (59 ; 61) est formée pour la bague de commutation (45) par une rondelle d'insertion (83 ; 85).

26. Amortisseur de vibrations selon les revendications 23 et 24,
**caractérisé en ce**
**qu'**une section transversale de pré-ouverture (67) pour la bague d'étranglement (63) et une section transversale de pré-ouverture (59) pour la bague de commutation (45) sont formées par une bague intermédiaire (109).

27. Amortisseur de vibrations selon les revendications 23 ou 24,
**caractérisé en ce que**
l'au moins une rondelle d'insertion (87 ; 89 ; 83 ; 85) est serrée entre le corps de base (36) divisé axialement en forme de douille.

28. Amortisseur de vibrations selon l'une quelconque des revendications 24 ou 25,
**caractérisé en ce**
**qu'**une douille de serrage (93) fixe, concentriquement au corps de base (36) en forme de douille, l'au moins une rondelle d'insertion (87 ; 89 ; 83 ; 85).

29. Amortisseur de vibrations selon la revendication 1,
**caractérisé en ce que**
la bague de commutation (45) est amortie dans au moins une position d'extrémité par un élément de ressort (101 ; 103).

30. Amortisseur de vibrations selon la revendication 28,
**caractérisé en ce que**
l'élément de ressort (101 ; 103) est formé par une rondelle élastique.

31. Amortisseur de vibrations selon la revendication 29,
**caractérisé en ce que**
la rondelle élastique (101 ; 103) est pourvue d'au moins un évidement (105 ; 107), qui est supérieur à la section transversale de pré-ouverture (59 ; 61) qui est commandée par la bague de commutation (45).

32. Amortisseur de vibrations selon la revendication 18,
**caractérisé en ce que**
la rondelle de retenue (49) est réalisée avec une bride de fixation (79) pour le corps de base (36) en forme de douille.

33. Amortisseur de vibrations selon la revendication 31,
**caractérisé en ce**
**qu'**une connexion filetée (81) existe entre la bride de fixation (79) et le corps de base (36) en forme de douille.

34. Amortisseur de vibrations selon la revendication 9,
**caractérisé en ce que**
la section transversale de pré-ouverture qui coopère avec la bague d'étranglement (63), est ajustable.

35. Amortisseur de vibrations selon la revendication 33,
**caractérisé en ce que**
la section transversale de pré-ouverture est formée par deux composants (13 ; 79) qui sont réglables l'un par rapport à l'autre.

36. Amortisseur de vibrations selon la revendication 34,
**caractérisé en ce**
**qu'**un composant est formé par le corps de piston (13) et un composant (79) est formé par le module (35).

37. Amortisseur de vibrations selon la revendication 34,
**caractérisé en ce que**
la rainure annulaire d'étranglement (69) pour la bague d'étranglement (63) présente une ouverture de commande (159) dont le recouvrement forme avec un coulisseau de commande (79) la section transversale de pré-ouverture réglable.
